# EUROPEAN PATENT SPECIFICATION

(11) **EP 1 709 875 B1**
(45) Date of publication and mention of the grant of the patent: **08.02.2012**
(21) Application number: 05102247.3
(22) Date of filing: 21.03.2005
(51) Int. Cl.: A23G 9/32, A23G 9/16

(54) **Process for manufacturing aerated frozen confections**
Verfahren zur Herstellung von gefrorenen belüfteten Süssspeisen
Procédé de fabrication des friandises aérées congelées

(43) Date of publication of application: 11.10.2006
(73) Proprietor: Nestec S.A., 1800 Vevey (CH)
(72) Inventor: Vieira, Josélio Batista, 95290, L'ISLE-ADAM (FR); Schlegel, Myriam, 60000, FOUQUENIES (FR); Wille, Hans-Juergen, 60000, ST MARTIN LE NOEUD (FR)
(74) Representative: Rupp, Christian

(56) References cited:
- WO-A-00/72697
- WO-A-01/06865
- GB-A- 1 446 144
- GB-A- 1 484 167
- US-A- 5 084 295
- US-A- 5 345 781

## Description

### Field of the invention

The present invention relates to the field of aerated frozen confections and particularly to a process for preparing such a confection.

### Background of the invention

Frozen confections, particularly milk-based frozen confections are traditionally made using ingredients such as: fat, milk solids-not-fat, sweeteners, stabilizers, emulsifiers and water. The various ingredients are mixed together, the mixture is then homogenized, pasteurized, cooled, optionally aged at about 2 to 6° C and deep-frozen with stirring with injection of air in a freezer to provide a degree of overrun of the order of 30 to 150%.

Frozen confections are particularly appreciated for their creamy and smooth characteristics. However, these products, in order to preserve their optimum organoleptic characteristics of smoothness, have to be stored and handled with care. Thus, temperature variations, even small, can be observed during storage, distribution or handling. This is particularly the case when the consumer buys a frozen confection, when they do not consume it straight away and when there is a gap between the time the product is taken from the deep-frozen section and when it is placed in the domestic freezer. In such circumstances, substantial or partial thawing of the product may occur before it is refrozen. Such cycles of temperature variation, called heat-shocks are responsible for the growth of ice crystals in the product. A crystallized texture thus results therefrom. This texture and the icy mouth feel accompanied by an impaired appearance of the product compromises or at the very least reduce its overall quality as perceived by the consumer.

Various gums and/or emulsifiers have been used as additives with the aim of improving the stability, the smoothness and the resistance of frozen confections to heat shocks. These may include guar gum, carob or guar seed flour, alginate, carboxymethyl cellulose, xanthan, carrageenan, synthetic or natural emulsifiers. The milk proteins contained in the milk dry extract participate in this stabilization due to their water-binding property.

However, the use of gums has the disadvantage of conferring on the product a texture which is sometimes too firm or gummy.

Low temperature extrusion (LTE) technology has been developed to produce ice cream and frozen desserts a finer microstructure of air bubbles and ice crystal size which provides the final product with a superior smooth texture. Although the microstructure of the ice cream is kinetically stabilized by the low temperature processing, the dispersed ice crystals can still lower their free energy by forming fewer and larger crystals, which will eventually lead to an icy texture. Therefore LTE has the drawback that the ice crystals are not stabilized in case the products are subjected to heat shocks.

WO 01/06865 is concerned with a process for the production of aerated frozen confections which are smooth and have resistance to heat shocks, which makes use of propylene glycol monostearate (PGMS), unsaturated monoglyceride and sorbitan tristearate as emulsifiers and milk solids-not-fat coming predominantly from skim milk.

GB-A- 1 484 167 is concerned with a method for making a partially frozen milk shake which comprises using cream, milk, glycerol as freezing point depressing agent, PGMS as emulsifier optionally together with glycerol monostearate and sodium stearoyl 2-lactylate, and carboxymethyl cellulose and carrageenan as stabilizers as well as other ingredients which are frozen in a conventional ice cream freezer to provide 50 to 100 % overrun.

GB 1446144 relates to a whipped food product suitable for freezing and which can subsequently be thawed without losing its foam structure, which comprises a whipping agent comprising propylene glycol monostearate and glycerol monostearate.

US 5084295 concerns low calorie frozen desserts having a smooth and creamy mouthfeel. The fat in the frozen desserts partially comprises nondigestible polyol polyesters. In addition, the products comprise emulsifiers which can be selected from propylene glycol monoesters of C₁₆-C₁₈ fatty acids.

WO 00/72697 describes an extruder comprising an extrusion screw having an optimized geometry for being used in low temperature extrusion processes. It also relates to a process for the manufacture of a frozen food product which uses said extruder.

US 5,345,781 also relates to extruder devices for cooling foams such as those used to manufacture ice cream.

The problem that the invention proposes to solve consists in improving the heat shock stability of aerated frozen products produced by low temperature extrusion without compromising their organoleptic qualities.

### Summary of the invention

To this end, the present invention consists in a process for making aerated frozen confections comprising the following steps:
- dispersion, heating and homogenisation of the ingredients entering into the composition of a frozen confection at a temperature, a pressure and for a period sufficient to hydrate and and pasteurize the mixture,
- cooling of the mixture to a temperature of between 2 and 8° C,
- optionally aging of the mixture at a temperature of between 2 and 6° C, with or without stirring, during 4 to 24 h,
- freezing to a temperature of between -4°C and -10° C, with incorporation of gas providing a degree of overrun of between 30 and 150 %,
- further cooling the partially frozen aerated mixture in a screw extrusion down to temperature below -11 °C and
- hardening of the mixture by deep-freezing to a temperature of between -20° C and -40° C,

The aerated frozen confection produced by the process of the invention is with or without fat and comprising sweeteners, milk solids-not-fat, water, emulsifier and stabilizer, and comprises by weight 0 to 12% fat, 4 to 10% milk solids-not-fat, 10 to 25% sweeteners, 0 to 0.5% stabilizers, 0.1 to 0.25% propylene glycol monoester of fatty acid as primary emulsifier and has an overrun of 30 to 150% by volume.

The use of such a process for improving the textural and organoleptic qualities of frozen confections, in particular after heat shock abuses is also part of the present invention.

The present invention further concerns an aerated frozen confection obtained by low temperature extrusion, characterized in that it preserves its smoothness and exhibits reduced ice crystal growth after being exposed to heat shock conditions which comprises using propylene glycol monoester of fatty acid as an emulsifier in an amount of 0.1 to 0.2 % by weight.

A method of improving production, storage and distribution of aerated frozen confections extending over time, volume and space, by stabilizing ice crystal growth when it is exposed to heat shock, which comprises using propylene glycol monoester of fatty acid (PGME) as an emulsifier in an amount of at least 0.1 % by weight, is further described.

The percentages indicated in the description relate to the percentages by weight except in the case of the overrun values which are defined in % by volume.

### Detailed description of the invention

Preferably, a frozen confection according to the present invention may comprise 2 to 12 % fat, 10 to 25% of sweeteners, 8 to 10 % of milk solids-not-fat of which 80 to 100 % are of whey origin, 0.1 to 0.5 % of stabilizers, 0.1 % to 0.25% of propylene glycol monoester of fatty acid as primary emulsifier and water as balance.

Thus the invention makes it possible to simultaneously improve the textural and organoleptic qualities of frozen confections, in particular after heat shock abuses.

The milk solids-not-fat used for making a frozen confection according to the invention may be powdered or concentrated defatted sweet whey, for example. They may include powdered or concentrated skim milk, for example. Milk solids-not-fat may also be derived from a commercial mixture of milk powder and whey proteins whose functionality has been modified by specific denaturation treatments.

Propylenglycol monoester of fatty acid (PGME) is used as a primary emulsifier in an amount of 0.1 to 0.25 % by weight and preferably in an amount of between 0.15 to 0.20 % for getting the optimum smoothness. In an embodiment, propylene glycol monoester of fatty acid is used in an amount of 0.1 to 0.2%, preferably in an amount of 0.1 to 0.15%. Preferably propylene glycol monostearate/palmitate is used.

The frozen confections prepared according to the invention may optionally comprise one additional emulsifier, for example, unsaturated monoglyceride or saturated mono-di glyceride in an amount of at least 5 % of the total emulsifiers, preferably in an amount of 0.04 to 0.16 % by weight as partial replacement of propylene glycol monoester of fatty acid.

The frozen confections prepared according to the present invention may comprise stabilizing agents; these may include carob flour, guar flour, alginates, carboxymethyl cellulose, xanthan, carrageenan, gelatin, starches used alone or in the form of a mixture at a dose of 0.1 to 0.5 %, preferably about 0.25 %.

The fat used may be a vegetable or animal fat, hydrogenated or otherwise fractionated, for example. It may be a fat of plant origin, preferably palm, coconut, soybean, rapeseed, olive, palm kernel oil, hydrogenated coconut oil, hydrogenated soybean oil, palm olein and their mixtures. It may also be a fat of animal origin, preferably butter fat and/or its fractions, which milk fat can be provided as cream.

The sweetener used may be sucrose, glucose, fructose or glucose syrup with DE (dextrose equivalent) varying from 20 to 42, or a mixture thereof, for example. The formulation of the product according to the invention may in addition comprise colourings such as beta-carotene, for example, and/or any type of flavourings or perfumes customarily used to flavour frozen confections, such as vanilla, strawberry or chocolate for example.

The compositions prepared according to the invention may optionally comprise additions such as fruit or fruit pieces, for example, or nuts, or hazelnuts, whole or in pieces, for example.

The choice of such ingredients makes it possible to obtain products with increased stability as well with a substantial reduction in the cost price. These savings are made through the partial replacement of the milk solids-not-fat traditionally used by whey. Furthermore, the organoleptic qualities of the frozen compositions prepared according to the invention are not reduced compared with the traditional products. Thus, the characteristics of smoothness and creaminess are increased and in particular, better preserved during the period of storage. In the frozen confections according to the invention, it is the use of propylene glycol monoester of fatty acid, as emulsifier which makes it possible to reduce remarkably the growth of water crystals in the products subjected to heat shock and thus it confers greater stability to heat shocks on the product.

For carrying out the process of the invention, the ingredients entering into the composition of a frozen confection prepared according to the present invention may be dispersed at around approximately 60 to 70°C for approximately 15 to 30 min., for example. The whole may be heated and homogenized at around 70 to 75°C, for example, at a pressure of the order of 140 to 220 bar, for example. These steps of dispersion, heating and homogenisation make it possible to bring about hydration of the stabilizer.

The mixture may then be pasteurized according to methods known to persons skilled in the art, for example at around 80 to 90°C for 10 to 30 s. The homogenisation-heating step may be carried out at a pasteurization temperature which brings about, on its own, pasteurization of the mixture. The mixture may then be cooled to around 2 to 8°C by known means. This mixture may then be aged or otherwise for 4 to 24 h at around 2 to 6°C, for example, with or without stirring. After this aging step, the mixture may be frozen at around -3 to -10° C, and preferably at about -4.5 to -8° C with stirring with injection of gas so as to produce a degree of overrun of the order of 30 to 150 %, for example. The mixture obtained may then be further cooled by extrusion at temperature below -11 ° C in a refrigerated single or twin screw extruder and hardened by freezing at around -20 to-40° C, for example.

To evaluate the remarkable properties of the emulsifier applied, various textural, microscopic and macroscopic tests may be carried out.

Standard heat shock: the samples initially stored at -30° C are subjected, for 7 days, to temperature cycles of -8°C/12h followed by -20° C/12h. After 7 days of stabilisation at -30° C, the melting parameters are evaluated for these samples which were subjected to a heat shock.

### Size and distribution of the ice crystals in an ice confection

An aliquot of ice confection is mixed with an equivalent quantity of glycerol and observed under a microscope at a temperature of -10° C. The measurement may be carried out in a chamber at -10° C equipped with microscope and a camera. It is thus possible to measure the mean diameter Dm (1,0) of the crystals (in µm) in the finished products and in the products which have been subjected to a heat shock (magnification 10x, respectively 20x depending on the crystals size).

The frozen confections prepared according to the present invention exhibit improved stability and organoleptic characteristics compared to traditional products. These products exhibit remarkable reduced ice crystal growth compared with traditional products when submitted to heat shock treatment. This property confers to the product smooth texture, which is considerably preserved after unfavourable storage conditions. Such functionalities make it possible to envisage production, storage and distribution of the products according to the invention extending over time.

A frozen confection prepared according to the present invention is therefore characterized in that it preserves its smooth texture and exhibits remarkable reduced growth of ice crystals due to ice recrystallization when submitted to heat shock conditions.

The expression "reduced crystal growth" is understood to mean an increase in the mean diameter Dm (1,0) of the ice crystals of less than 50% after heat shock.

The invention is described below with reference to examples of preferred embodiments and modes of formulation.

### Examples

### Examples 1-4: Improved Texture Stability of Low Temperature Extruded (LTE) frozen confection

From Table 1 below it can be noted that after 1 week heat shock the mean ice size of LTE product increases 211%. In comparison the regular processed product to same formulation, increases in mean ice size by 161 %. This is to be expected, because with initially smaller ice crystals there is a much higher ice crystal surface area in the LTE product for potential liquefaction and re-deposition on the remaining (originally larger) crystals.

**Table 1**

| | Fresh product Median Dm (1,0) | Heat-shock product Median Dm (1,0) |
|---|---|---|
| Conventional Freezing | 39 | 63 |
| Drawing temperature: -5°C | | |
| LTE | 26 | 55 |
| Drawing temperature: -12.5° C | | |

Propylene glycol monoesters of fatty acids (PGME) have been shown previously to work as inhibitor of ice crystal growth. The crystal growth inhibiting effect of PGME is not expected to be affected by process conditions. The two techniques described above, LTE and addition of PGME were therefore combined to control the ice crystal growth in frozen confections produced by LTE. Examples of aerated frozen confections made according to the present invention. Frozen confections were produced according to the formulations indicated in Table 2 below.

**Table 2**

| Ingredients /Trials | Comp. Example | Example 1 | Example 2 | Example 3 | Example 4 |
|---|---|---|---|---|---|
| Milk Cream 35% Fat | 10.00 | 10.00 | 10.00 | 10.00 | 10.00 |
| Casein/Whey Protein Blend 20% | 10.50 | 10.50 | 10.50 | 10.50 | 10.50 |
| Cremodan 809 Creamline | 0.50 | - | - | - | - |
| PGMS | - | 0.10 | 0.15 | 0.20 | 0.25 |
| SMDG | - | 0.08 | 0.08 | 0.08 | 0.08 |
| Guar Gum | - | 0.15 | 0.15 | 0.15 | 0.15 |
| Locust Bean Gum | 0.10 | 0.15 | 0.15 | 0.15 | 0.15 |
| Invert glucose syrup DE 40 | 17.30 | 17.30 | 17.30 | 17.30 | 17.30 |
| Glucose syrup DE 36-40 | 4.30 | 4.30 | 4.30 | 4.30 | 4.30 |
| Water | 57.30 | 57.30 | 57.30 | 57.30 | 57.30 |

| | | | | | |
|---|---|---|---|---|---|
| Casein/whey protein blend: Nollibel LV154, Bel Industries PGMS: Propylene glycol monostearate PGMS SPV® from Danisco; SMDG: Saturated Mono-diglycerides: ADMUL® 60-04 from Kerry. | | | | | |

A combination of a traditional ice cream freezer and a twin screw low-temperature extruder was used for the frozen confection production. The conventional freezer (APV WCB) was used as the first cooling step and operated in a serial configuration with the low-temperature extruder (Schröder, Lubeck, Germany). The inlet temperature of the mixture in the freezer was + 4° C, the exit temperature on the freezer was - 5.0° C and the exit temperature - 15° C on the extruder. The extruder was set to 14 rpm and overrun to 100 % at a mix flow rate of 50 L/h.

Table 3 shows that like in conventional freezing, as the concentration of PGMS increases in the frozen confection, the ice crystal size reduces in LTE-produced frozen confection.

**Table 3**

| Recipe | Fresh product Median Dm (1,0) | Heat-shock product Median Dm (1,0) |
|---|---|---|
| Example 4 (0. 25% PGMS) | 28 | 28 |
| Example 3 (0.20% PGMS) | 32 | 36 |
| Example 2 (0.15% PGMS) | 35 | 47 |
| Example 1 (0.10% PGMS) | 41 | 54 |
| Recipe Comp Ex (No PGMS) | 37 | 80 |

### Sensory analysis:

The samples are evaluated by a panel of people trained in the evaluation of texture. To that end, samples of examples of the invention are compared with the same after having been subjected to heat shock. The questionnaire distributed contains the descriptive attributes for smoothness, absence of large ice crystals in the frozen confection mass. The samples were thus evaluated by trained panellists who score each texture attribute in a scale from 0 to 100. The results are given in Table 4 below.

**Table 4**

| Recipe | Fresh product Smoothness | Heat-shock product Smoothness |
|---|---|---|
| Example 3 (0.20% PGMS) | 76 | 51 |
| Example 2 (0.15% PGMS) | 83 | 64 |
| Example 1 (0.10% PGMS) | 83 | 47 |
| Recipe Comp Ex (No PGMS) | 70 | 32 |

| | | |
|---|---|---|
| Table 4. Smoothness scores given by a panel of trained panel. 0 means low smoothness and 100 high smoothness. | | |

We were surprised to find that the product smoothness does not progressively improve with the ice crystal size reduction. The table above show that the smoothness reduces significantly when PGMS concentration is increased above 0.15%. We believe that the relative loss of smoothness when the PGMS concentration exceeds 0.15% is due to high level of fat destabilization which produces a coarse texture.

## Claims

1. Process for preparing an aerated frozen confection, with or without fat and comprising, sweeteners, milk solids-not-fat, water, emulsifier and stabilizer, which comprises by weight 0 to 12 % fat, 4 to 10 % milk solids-not-fat, 10 to 25 % sweeteners, 0 to 0.5 % stabilizers, 0.1 to 0.25 % propylene glycol monoester of fatty acid as primary emulsifier and has an overrun of 30 to 150% by volume, comprising the followings steps:
a. dispersion, heating and homogenization of the ingredients entering into the composition of a frozen confection at a temperature, a pressure and for a period sufficient to hydrate and pasteurize the mixture,
b. cooling of the mixture to a temperature of between 2 and 8°C,
c. optionally aging of the mixture at a temperature of between 2 and 6°C, without stirring, during 4 to 24 h,
d. freezing to a temperature of between -4°C and - 10°C, providing a degree of overrun of between 30 and 150 %,
e. further cooling the aerated mixture by extrusion to a temperature below -11°C in a screw extruder and
f. hardening of the mixture by deep-freezing to a temperature of between -20°C and -40°C.

2. Process according to claim 1, wherein propylene glycol monoester of fatty acid is used in an amount of 0.1 to 0.2%.

3. Process according to claim 2, wherein propylene glycol monoester of fatty acid is used in an amount of 0.1 to 0.15%.

4. Process according to any of claims 1 to 3, wherein propylene glycol monostearate/palmitate is used as emulsifier.

5. A process according to claim 1, wherein the frozen confection comprises 2 to 12 % fat by weight.

6. A process according to claim 1, wherein the milk solids-not-fat in the frozen confection comprise powdered or concentrated skim milk and/or mixtures with whey proteins.

7. A process according to claim 1, wherein the aerated frozen confection comprises at least one stabilizer chosen from the group comprising carob flour, guar flour, alginates, carboxymethyl cellulose, xanthan, carrageenan, gelatin, starches used alone or in the form of a mixture at a dose of 0.1 to 0.5 %, preferably about 0.25 % by weight.

8. A process according to claim 1, wherein the sweeteners in the aerated frozen confection are chosen from the group comprising sucrose, glucose, fructose or glucose syrups or a mixture of these agents.

9. Aerated frozen confection obtainable by a method according to any of claims 1 to 8.

10. Use of a process according to any of claims 1 to 8 for improving the textural and organoleptic qualities of frozen confections, in particular after heat shock abuses.

11. Aerated frozen confection obtained by low temperature extrusion, **characterised in that** it preserves its smoothness and exhibits reduced ice crystal growth after being exposed to heat shock conditions which comprises using propylene glycol monoester of fatty acid as an emulsifier in an amount of 0.1 to 0.2 % by weight.

## Patentansprüche

1. Verfahren zur Herstellung eines belüfteten gefrorenen Konfekts, mit oder ohne Fett und enthaltend Süßstoffe, fettfreie Milchtrockenmasse, Wasser, Emulgator und Stabilisator, das 0 bis 12 Gew.-% Fett, 4 bis 10 Gew.-% fettfreie Milchtrockenmasse, 10 bis 25 Gew.-% Süßstoffe, 0 bis 0,5 Gew.-% Stabilisatoren, 0,1 bis 0,25 Gew.-% Propylenglycol-Fettsäuremonoester als primären Emulgator enthält und einen Überlauf von 30 bis 150 Vol.-% hat, wobei das Verfahren die folgenden Schritte umfasst:
a. Dispergierung, Erwärmen und Homogenisieren der von der Zusammensetzung eines gefrorenen Konfekts erfassten Bestandteile, bei einer Temperatur, einem Druck und über einen Zeitraum, der ausreicht, um die Mischung zu hydratisieren und zu pasteurisieren,
b. Abkühlen der Mischung auf eine Temperatur zwischen 2 und 8°C,
c. gegebenenfalls Altern der Mischung bei einer Temperatur zwischen 2 und 6°C ohne Rühren, über 24h,
d. Einfrieren auf eine Temperatur zwischen -4°C und -10°C unter Bereitstellung eines Überlaufgrades zwischen 30 und 150%,
e. weiteres Abkühlen der belüfteten Mischung durch Extrusion auf eine Temperatur unter - 11°C in einem Schneckenextruder, und
f. Härten der Mischung durch Tiefgefrieren auf eine Temperatur zwischen -20°C und -40°C.

2. Verfahren nach Anspruch 1, wobei der Propylenglycol-Fettsäuremonoester in einer Menge von 0,1 bis 0,2% verwendet wird.

3. Verfahren nach Anspruch 2, wobei der Propylenglycol-Fettsäuremonoester in einer Menge von 0,1 bis 0,15% verwendet wird.

4. Verfahren nach einem der Ansprüche 1 bis 3 , wobei Propylenglykolmonostearat/-palmitat als Emulgator verwendet wird.

5. Verfahren nach Anspruch 1, wobei das gefrorene Konfekt 2 bis 12 Gew.-% Fett enthält.

6. Verfahren nach Anspruch 1, wobei die fettfreie Milchtrockenmasse in dem gefrorenen Konfekt pulverisierte oder konzentrierte Magermilch und/oder Mischungen mit Molkenproteinen enthält.

7. Verfahren nach Anspruch 1, wobei das belüftete gefrorene Konfekt mindestens einen Stabilisator enthält, der ausgewählt ist aus der Gruppe enthaltend Johannisbrotkernmehl, Guarkernmehl, Alginate, Carboxymethylcellulose, Xanthan, Carrageen, Gelatine, Stärken, alleine verwendet oder in Form einer Mischung in einer Dosierung von 0,1 bis 0,5 Gew.-%, vorzugsweise etwa 0,25 Gew.-%.

8. Verfahren nach Anspruch 1, wobei die Süßstoffe in dem belüfteten gefrorenen Konfekt aus der Gruppe enthaltend Saccharose, Glucose, Fructose oder Glucose-Sirupe oder eine Mischung dieser Stoffe ausgewählt sind.

9. Belüftetes gefrorenes Konfekt, erhältlich durch eine Methode nach einem der Ansprüche 1 bis 8.

10. Verwendung eines Verfahrens nach einem der Ansprüche 1 bis 8 zur Verbesserung der strukturellen und organoleptischen Eigenschaften von gefrorenen Konfekten, insbesondere nach Hitzeschock-Falschanwendungen.

11. Belüftetes gefrorenes Konfekt, das durch Niedrigtemperaturextrusion erhalten wurde, **dadurch gekennzeichnet, dass** es seine Glattheit behält und ein vermindertes Eiskristallwachstum aufweist, nachdem es Hitzeschockbedingungen ausgesetzt wurde, welches die Verwendung von Propylenglycol-Fettsäuremonoester als Emulgator in einer Menge von 0,1 bis 0,2 Gew.-% umfasst.

## Revendications

1. Procédé pour la préparation d'une confiserie aérée congelée, avec ou sans matière grasse et comprenant des édulcorants, de la matière sèche non grasse du lait, de l'eau, un émulsifiant et un stabilisateur, qui comprend en poids de 0 à 12 % de matière grasse, de 4 à 10 % de matière sèche non grasse de lait, de 10 à 25 % d'édulcorants, de 0 à 0,5 % de stabilisateurs, de 0,1 à 0,25 % de monoester d'acide gras du propylène glycol comme émulsifiant primaire et a un foisonnement de 30 à 150 % en volume, comprenant les étapes suivantes :
a. dispersion, chauffage et homogénéisation des ingrédients entrant dans la composition de la confiserie congelée à une température, à une pression et pendant une période suffisante pour hydrater et pasteuriser le mélange,
b. refroidissement du mélange à une température comprise entre 2 et 8 °C,
c. vieillissement, de façon optionnelle, du mélange à une température comprise entre 2 et 6 °C, sans brassage, pendant 4 à 24 h,
d. congélation à une température comprise entre -4 °C et -10 °C, procurant un degré de foisonnement compris entre 30 et 150 %,
e. refroidissement supplémentaire du mélange aéré par extrusion à une température inférieure à -11 °C dans une extrudeuse à vis et
f. durcissement du mélange par surgélation à une température comprise entre -20 °C et -40 °C.

2. Procédé selon la revendication 1, dans lequel le monoester d'acide gras du propylène glycol est utilisé dans une quantité comprise entre 0,1 et 0,2 %.

3. Procédé selon la revendication 2, dans lequel le monoester d'acide gras du propylène glycol est utilisé dans une quantité comprise entre 0,1 et 0,15 %.

4. Procédé selon l'une quelconque des revendications 1 à 3, dans lequel du monostéarate/palminate propylène glycol est utilisé comme émulsifiant.

5. Un procédé selon la revendication 1, dans lequel la confiserie congelée comprend entre 2 et 12 % de matière grasse en poids.

6. Un procédé selon la revendication 1, dans lequel la matière sèche non grasse de lait dans la confiserie congelée comprend du lait écrémé en poudre ou concentré et/ou des mélanges avec des protéines de lactosérum.

7. Un procédé selon la revendication 1, dans lequel la confiserie aérée congelée comprend au moins un stabilisateur choisi parmi le groupe comprenant farine de caroube, farine de guar, alginates, carboxyméthylcellulose, xanthane, carraghénine, gélatine, amidons utilisés seuls ou sous la forme d'un mélange à une dose comprise entre 0,1 à 0,5 %, de préférence environ 0,25 % en poids.

8. Un procédé selon la revendication 1, dans lequel les édulcorants dans la confiserie aérée congelée sont choisis parmi le groupe comprenant saccharose, glucose, fructose ou sirops de glucose ou un mélange de ces agents.

9. Confiserie aérée congelée susceptible d'être obtenue par un procédé selon l'une quelconque des revendications 1 à 8.

10. Utilisation d'un procédé selon l'une quelconque des revendications 1 à 8 pour améliorer les qualités de texture et organoleptiques de confiseries congelées, en particulier après des abus de chocs thermiques.

11. Confiserie aérée congelée obtenue par extrusion à basse température, **caractérisée en ce que** elle préserve son onctuosité et présente un développement réduit de cristaux de glace après avoir été exposée à des conditions de choc thermique qui comprend l'utilisation de monoester d'acide gras du glycol propylénique comme émulsifiant dans une quantité comprise entre 0,1 et 0,2 % en poids.
